# FASCICULE DE BREVET EUROPEEN

(11) **EP 4 143 271 B1**
(45) Date de publication et mention de la délivrance du brevet: **08.05.2024**
(21) Numéro de dépôt: 21715283.4
(22) Date de dépôt: 31.03.2021
(51) Int. Cl.: C09K 8/504, C09K 8/506, E21B 33/138, C09K 8/57, C09K 8/575, C04B 28/26

(54) **PROCEDE DE TRAITEMENT D'UNE FORMATION SOUTERRAINE PAR INJECTION D'UNE SOLUTION AQUEUSE GELIFIANTE COMPRENANT UN ALUMINATE**
VERFAHREN ZUR BEHANDLUNG EINER UNTERIRDISCHEN FORMATION DURCH INJEKTION EINER WÄSSRIGEN GELLÖSUNG MIT EINEM ALUMINAT
METHOD FOR TREATING A SUBTERRANEAN FORMATION BY INJECTING AN AQUEOUS GELLING SOLUTION COMPRISING AN ALUMINATE

(30) Priorité: 28.04.2020 FR 2004214
(43) Date de publication de la demande: 08.03.2023
(73) Titulaire: IFP Energies nouvelles, 92500 Rueil-Malmaison (FR)
(72) Inventeur: FLEURY, Marc, 92852 RUEIL-MALMAISON CEDEX (FR); SISSMANN, Olivier, 92852 RUEIL-MALMAISON CEDEX (FR)
(74) Mandataire: IFP Energies nouvelles
(86) Numéro de dépôt international: PCT/EP2021/058434
(87) Numéro de publication internationale: WO 2021/219318

(56) Documents cités:
- EP-A1- 0 155 859
- WO-A1-2013/165717
- WO-A1-2017/174243
- WO-A1-2019/222095
- US-A- 3 493 406

## Description

### Domaine technique

La présente invention concerne le domaine du traitement d'une formation souterraine afin d'étanchéifier et/ou de consolider la formation souterraine et/ou de colmater un puits, en particulier dans le domaine du stockage géologique de gaz acides, par exemple le dioxyde de carbone CO₂.

On entend par « étanchéifier » la formation souterraine un procédé visant à diminuer la perméabilité d'au moins une partie de la formation souterraine, notamment par rapport un fluide donné, par exemple de l'huile ou de l'eau. On entend par « consolider » la formation souterraine un procédé visant à améliorer des propriétés mécaniques de la formation souterraine. A noter qu'il est possible de réaliser ces deux applications avec un seul procédé. On entend par « colmater » un puits un procédé visant à boucher les fissures présentes dans le matériau, par exemple ciment, formant le puits.

Dans différents domaines d'utilisation des formations souterraines, il est souvent utile d'étanchéifier et/ou de consolider la formation souterraine et/ou de colmater un puits afin de favoriser son utilisation ultérieure, par exemple pour le stockage géologique de gaz acide. Par exemple, les sols fragiles ou argileux doivent être consolidés pour remédier aux phénomènes de gonflement ou retrait des argiles. Selon un autre exemple, les circulations d'eau dans les sols doivent souvent être étanchéifiées, afin notamment de créer un chemin préférentiel pour un fluide en diminuant la perméabilité à ce fluide des zones adjacentes (le fluide pouvant être par exemple de l'eau ou de l'huile)..

### Technique antérieure

Plusieurs méthodes ont été développées pour étanchéifier et/ou consolider les formations souterraines.

Par exemple, la demande de brevet EP 0597735 décrit la préparation d'un coulis (c'est-à-dire un mortier fluide pouvant couler dans des cavités, un tel coulis comprend des particules solides) pour l'étanchéification et/ou la consolidation des sols et des matériaux de construction. Un tel coulis ne présente pas une viscosité adaptée pour être injecté dans un puits d'injection de manière à traiter une formation souterraine en profondeur.

De plus, on connaît la demande de brevet WO 2010/0107219 A1, qui décrit une méthode de traitements des abords de puits de stockage de gaz acide. Pour cette méthode, on injecte dans la roche un fluide de lavage, puis une solution réactive adaptée à réagir avec des gaz acides, cette solution réactive comporte des oxydes basiques. Toutefois, cette méthode propose l'utilisation de matériaux pouvant être onéreux, pouvant polluer la formation souterraine, et pouvant nécessiter une préparation spécifique pour notamment régler la viscosité.

En outre, la demande de brevet FR 3049642 (WO 2017/174243) décrit également une méthode de traitement des abords de puits, dans laquelle on prépare, puis on injecte dans une formation souterraine, une solution aqueuse gélifiante comprenant une solution alcaline de silicate de potassium et un acide acétique. Cette solution aqueuse gélifiante permet, grâce à ces propriétés gélifiantes, de colmater les abords du puits, tout en étant peu coûteuse et peu polluante. Toutefois, cette solution aqueuse gélifiante peut, sous certaines conditions, être soumise à des mécanismes de synérèse après la gélification induite par l'acide acétique. Ce mécanisme est une évolution des liaisons chimiques présentes dans les polymères constituant le réseau structurant du gel. Le mécanisme de synérèse se traduit par l'expulsion d'eau hors du gel. Cette expulsion d'eau du gel ne permet donc pas l'étanchéification et/ou la consolidation de la formation souterraine de manière stable dans le temps.

### Résumé de l'invention

La présente invention a pour objectif d'étanchéifier et/ou de consolider une formation souterraine et/ou de colmater d'un puits, en profondeur, sans pollution de la formation souterraine et de manière stable dans le temps (avec un mécanisme de synérèse limité). Dans ce but, la présente invention concerne un procédé pour étanchéifier et/ou consolider une formation souterraine, dans lequel on prépare, puis on injecte dans la formation souterraine, une solution aqueuse gélifiante comprenant une solution alcaline de silicate de potassium, un acide acétique, et un aluminate. La solution aqueuse gélifiante permet d'étanchéifier et/ou consolider la formation souterraine et/ou colmater un puits traversant la formation souterraine. L'aluminate présent dans la solution aqueuse gélifiante permet de limiter le mécanisme de synérèse pour limiter l'expulsion d'eau du gel, ce qui favorise une étanchéité et/ou une consolidation de la formation souterraine stable dans le temps et/ou le colmatage du puits.

L'invention concerne un procédé de traitement d'une formation souterraine, ladite formation souterraine étant traversée par au moins un puits d'injection. Pour ce procédé, on réalise les étapes suivantes :
a) On prépare une solution aqueuse gélifiante comprenant une solution alcaline de silicate de potassium, un acide acétique et un aluminate ; et
b) On injecte à partir dudit puits d'injection dans ladite formation souterraine ladite solution aqueuse gélifiante pour étanchéifier et/ou pour consolider ladite formation souterraine.

Selon un mode de réalisation, ledit aluminate est choisi parmi l'aluminate de sodium sous forme de poudre et l'aluminate de potassium sous forme de poudre.

Selon un aspect, on prépare ladite solution aqueuse gélifiante en fonction de caractéristiques de ladite formation souterraine, telle que la porosité, la perméabilité, la température environnante et/ou le pH environnant.

Avantageusement, on prépare une solution aqueuse gélifiante ayant une viscosité comprise entre 1 et 10 cP.

Conformément à une mise en oeuvre, on prépare une solution aqueuse gélifiante ayant un temps de prise compris entre 3 et 20 heures.

Selon un option, ledit acide acétique a une concentration comprise entre 0,1 et 5 mol/L, de préférence entre 0,5 et 2 mol/L.

Conformément à un mode de réalisation, ladite solution alcaline de silicate de potassium comprend une concentration de silicium Si de 0,5 à 7 mol/L, de préférence de 0,5 à 3 mol/L.

De manière avantageuse, ladite solution alcaline de silicate de potassium comprend un ratio molaire de dioxyde de silicium SiO₂ par rapport à l'oxyde de potassium K₂O compris entre 0,5 et 10, de préférence entre 1 et 5.

Selon une mise en oeuvre, ladite solution aqueuse gélifiante comprend entre 1 et 30 % en masse d'acide acétique, de préférence entre 5 et 30 %.

Avantageusement, la solution aqueuse gélifiante peut comprendre entre 0,1 et 1 % en masse d'aluminate, de préférence entre 0,3 et 0,8%, de manière très préférée entre 0,4 et 0,6% sensiblement 0,5 % en masse d'aluminate.

Selon une caractéristique, on injecte à partir dudit puits d'injection un fluide de lavage dans ladite formation souterraine préalablement à l'injection de ladite solution aqueuse gélifiante.

Selon un mode de réalisation, ledit traitement de la formation souterraine est une étanchéification de ladite formation souterraine, et/ou une consolidation de ladite formation souterraine, et/ou un colmatage d'un puits de ladite formation souterraine.

Selon un mode de réalisation, ledit puits est un puits de stockage, en particulier de stockage de gaz acide dans ladite formation souterraine.

Selon un aspect, on stocke ledit gaz acide préalablement à l'étape d'injection de ladite solution aqueuse gélifiante.

De manière avantageuse, ladite formation souterraine comporte un pH environnant inférieur à 9.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre différentes configurations de la substitution d'aluminium dans le gel de silice formé au sein de la solution aqueuse gélifiante.
La figure 2 illustre une courbe comparative de la fraction d'eau contenue dans le gel utilisé pour un procédé selon l'art antérieur et pour le procédé selon l'invention.

### Description des modes de réalisation

Le principe de l'invention repose sur la mise en place dans une formation souterraine d'une solution permettant de limiter fortement la perméabilité de la roche du réservoir, et/ou de la consolider et/ou de colmater un puits. Ainsi, la solution injectée permet notamment de limiter voire d'empêcher les fuites de fluides et/ou d'améliorer les propriétés mécaniques de la formation souterraine. On entend par formation souterraine, le sol et le sous-sol, la profondeur de la formation souterraine peut être compris entre quelques mètres (par exemple pour des applications de consolidation de sols sous des bâtiments ou des habitations) à plusieurs kilomètres (par exemple pour des applications de puits d'hydrocarbures ou de stockage de gaz).

La présente invention concerne donc un procédé de traitement d'une formation souterraine, la formation souterraine étant traversée par au moins un puits d'injection ou un injecteur (le puits ou l'injecteur peut être réalisé à une profondeur de quelques mètres à plusieurs kilomètres, la profondeur peut dépendre notamment de l'application du procédé de traitement d'une formation souterraine), pour lequel on réalise les étapes suivantes :
- on prépare, en surface, une solution aqueuse gélifiante comprenant une solution alcaline de silicate de potassium, un acide acétique, et un aluminate,
- on injecte, à partir du puits d'injection ou de l'injecteur, dans la formation souterraine, la solution aqueuse gélifiante pour étanchéifier et/ou consolider la formation souterraine.

Le traitement de la formation souterraine peut consister notamment à l'étanchéification de la formation souterraine et/ou à la consolidation de la formation souterraine et/ou au colmatage d'un puits de la formation souterraine.

Le procédé selon l'invention peut comporter plusieurs étapes successives, par exemple deux, d'injection de la solution aqueuse gélifiante. De préférence, le procédé selon l'injection peut comporter une unique injection.

Une telle solution aqueuse gélifiante est stable et inaltérable, notamment lorsque le pH environnant (de la formation souterraine) est inférieur à 9. C'est pourquoi, le procédé selon l'invention peut, de préférence, être mis en oeuvre pour une formation souterraine ayant un pH inférieur à 9, ce qui est le cas en général.

Le terme « gélifiant » indique que la solution aqueuse est formulée sous forme d'un liquide non gélifié et peu visqueux, qui gélifie in situ, en d'autres termes qui termine sa gélification une fois injectée dans la formation souterraine (le pH et le cisaillement dans la formation souterraine favorisent la gélification de la solution aqueuse gélifiante). La composition de la solution aqueuse gélifiante est donc choisie de manière à former un gel, à partir d'un temps suffisant long pour permettre le transport du liquide de la surface vers la formation souterraine. Ainsi, grâce à sa propriété gélifiante, la solution aqueuse peut remplir son rôle de limitation de perméabilité et de la porosité de la formation souterraine.

La solution aqueuse gélifiante préparée dans le procédé selon l'invention est une solution minérale (non organique). De plus, la solution aqueuse gélifiante ne comporte aucune particules solides, ni aucun autre sel que l'aluminate et le silicate.

Une solution alcaline est une solution basique qui a un pH supérieur à 7.

On rappelle que la silice est très soluble dans les solutions alcalines, notamment dans les solutions alcalines de pH d'environ 10 et supérieur à 10. De plus, une baisse de pH provoque la précipitation de la silice contenue dans la solution alcaline : à partir d'une phase liquide dans laquelle la silice est sous une forme ionique, des oligomères se créent puis se condensent pour former un gel. Le gel a tendance à se fixer sur des surfaces minérales en formant des liaisons chimiques. Ainsi, dans une formation souterraine poreuse, l'injection de telles substances permet de réduire considérablement la perméabilité et la porosité, voire d'obstruer complètement le réseau poreux, après précipitation. En outre, les minéraux précipités par la solution aqueuse gélifiante forment aussi une couche protectrice pour les équipements de puits vis-à-vis des gaz acides stockés.

Il existe différentes formes de silicates : de sodium, potassium, lithium, etc. Le silicate de potassium K est un silicate soluble dans l'eau, de formule générale K₂O₅Si₂. Ce silicate présente l'avantage de rendre la solution alcaline moins visqueuse que le silicate de sodium Na notamment. Ainsi, le silicate de potassium nécessite une dilution moindre, ce qui simplifie la préparation de la solution aqueuse gélifiante. De plus, étant donné que les solutions alcalines de silicate ne contiennent pas de particules, il n'y a pratiquement pas de limites d'injectivité par rapport à la taille des pores du milieu poreux de la formation souterraine. En particulier, on peut envisager l'injection d'une telle solution dans des milieux compacts présentant des seuils de pores nanométriques, améliorant ainsi encore leur capacité de barrière. En outre, la solution alcaline de silicate de potassium présente l'avantage d'être peu coûteuse, de l'ordre de quelques centaines d'Euros la tonne. Par exemple, le silicate de potassium peut être choisi par les produits commerciaux Betol K 35 T ^{™}, Betol K 48 T ^{™}, Betol K 54 T ^{™} ou Betol K 28 T ^{™} commercialisés par Woellner (Allemagne). A titre d'exemple non limitatif, la composition des silicates de potassium Betol K 35 T ^{™} et Betol K 28 T ^{™} sont décrits dans le tableau 1. Dans ce tableau, la densité, sans unité, correspond à la masse volumique rapportée à celle de l'eau.

**[Table 1]**

| Produit | SiO₂ % | K₂O % | SiO₂/K₂O | Viscosité (cP) | Densité | pH |
|---|---|---|---|---|---|---|
| Betol K 35 T TM | 23,9 | 10,9 | 3,43 | 55 | 1,32 | 11 |
| Betol K 28 T TM | 20,5 | 8,2 | 3,92 | 28 | 1,25 | 10,8 |

L'acide acétique, appelé également acide éthanoïque est un simple acide carboxylique avec une chaîne carbonée théorique en C₂, analogue à l'éthane, de masse molaire 60 g/mol et de formule chimique brute C₂H₄O₂ ou développée CH₃COOH. Le vinaigre est un exemple de solution d'acide acétique : il peut s'agir d'un mélange d'eau et d'acide acétique. L'acide acétique présente l'avantage, contrairement à d'autres acides, de ne pas être polluant ou dangereux, que ce soit lors de sa préparation, ou injecté dans la formation souterraine.

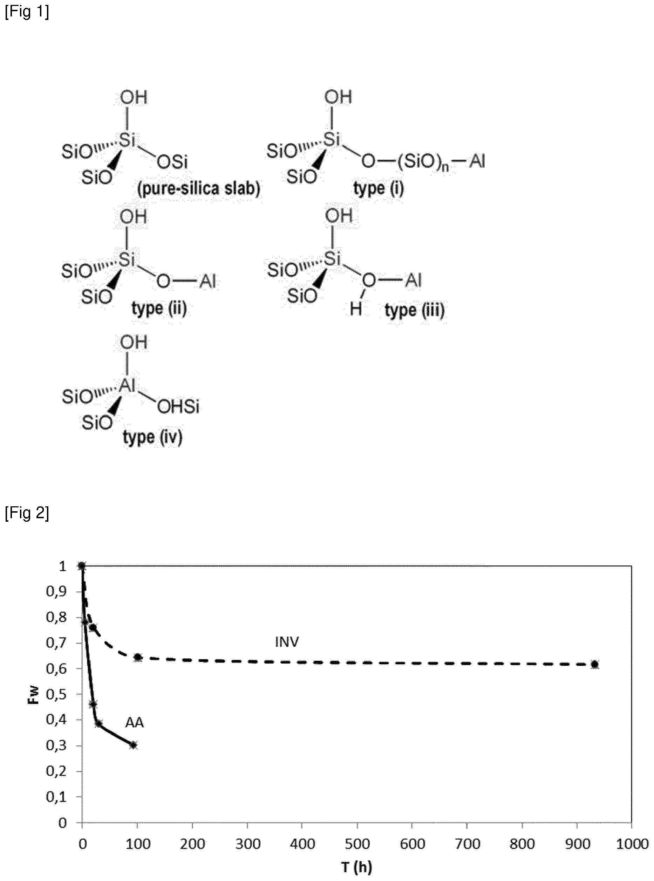

Un aluminate est un composé contenant un oxyanion d'aluminium. L'ajout d'aluminate ne modifie pas significativement la viscosité de la solution aqueuse gélifiante. De plus, l'aluminate ne présente aucun effet environnemental. On privilégie l'aluminium sous forme d'aluminate en raison de sa solubilité dans la solution aqueuse (par exemple l'aluminium pur n'est pas soluble, et ne serait donc pas adapté au procédé selon l'invention). L'ajout d'aluminium dans la solution aqueuse gélifiante génère une réaction par laquelle un atome d'aluminium va substituer un atome de silicium dans le réseau de silice formé au sein de la composition spécifique. L'emplacement de cette substitution dépend notamment des conditions de pH et de la concentration en ions aluminium. La figure 1 illustre, schématiquement et de manière non limitative, différentes configurations de la substitution d'aluminium dans le réseau de silice. La figure indiquée « pure-silica stab » correspond au réseau de silice avant la substitution (en l'absence d'aluminium). Les figures indiquées « type (i) » à « type (iv) » correspondent aux différentes configurations. La configuration la plus efficace pour limiter le mécanisme de synérèse est la configuration de « type (iv) », étant donné que l'aluminium prend la place de la silice au centre du tétraèdre, puisqu'il change la longueur de toutes les liaisons chimiques, ce qui permet de limiter l'expulsion de l'eau du gel.

Selon un mode de réalisation de l'invention, l'aluminate peut être un aluminate de sodium (de formule NaAlO₂) ou un aluminate de potassium (de formule KAlO₂). En effet, ces aluminates sont solubles dans la solution aqueuse. De plus, le potentiel ionique du sodium et du potassium est faible, et par conséquent, ces atomes attirent moins les anions pour former des minéraux et précipiter, ce qui permet de former une solution aqueuse gélifiante sans précipité. De préférence, le procédé selon l'invention peut mettre en oeuvre de l'aluminate de sodium. En effet, cet aluminate permet une augmentation de l'étanchéité dans le temps de la formation souterraine.

De plus, de préférence, l'aluminate est ajouté sous forme de poudre dans la solution aqueuse gélifiante, par exemple une poudre d'aluminate de sodium ou une poudre d'aluminate de potassium.

Conformément à une mise en oeuvre de l'invention, la solution aqueuse gélifiante est préparée à température ambiante, et les produits (par exemple : eau ou poudre) sont de préférence rajoutés petits a petits dans la solution de silicate. Ainsi, l'étape de préparation de la solution aqueuse gélifiante peut être mise en oeuvre par ajout de l'aluminate dans l'eau de dilution du silicate alcalin, avant ajout de l'acide acétique. En d'autres termes, la préparation peut être mise en oeuvre de la manière suivante : on mélange l'aluminate dans l'eau, on dilue le silicate de potassium avec cette eau, puis on ajoute l'acide acétique en tenant compte de la température.

Selon un mode de réalisation de l'invention, la composition de la solution aqueuse gélifiante est déterminée essentiellement en fonction de la température de la formation souterraine. Par exemple, lors de la préparation, on peut modifier les proportions d'eau et d'acide pour adapter le temps de gélification tout en restant peu visqueux. En effet, les contraintes habituelles principales pour l'injection de solutions dans une formation souterraine sont les suivantes :
- une viscosité modérée de telle sorte que les pressions d'injection se situent bien en dessous des pressions de fracturation de la formation, avantageusement, la viscosité de la solution aqueuse gélifiante peut être comprise entre 1 et 10 cP, et
- un temps de prise, appelé aussi temps de gélification, (c'est-à-dire le temps nécessaire entre la préparation de la solution et sa gélification) suffisant pour permettre l'injection de la solution lorsqu'elle est préparée en surface, puis injectée dans la formation, avantageusement, le temps de gélification peut être compris entre 3 et 20 heures.

Selon une mise en oeuvre de l'invention, l'acide acétique peut avoir une concentration comprise entre 0,1 et 5 mol/L, de préférence entre 0,5 et 2 mol/L au sein de la solution utilisée pour la préparation. Cette gamme de concentration permet notamment de préparer la solution gélifiante sans risque de générer des agrégats et une solution non homogène. Par exemple, l'acide acétique peut avoir une concentration sensiblement égale à 1 mol/L, c'est-à-dire une concentration sensiblement identique à celle d'un vinaigre. C'est la concentration d'acide pur dans la solution gélifiante qui permet de régler le temps de gélification. Ainsi, on peut diluer la solution initiale de silicate avec une plus grande quantité d'eau si un acide plus concentré est utilisé.

Conformément à une réalisation de l'invention, la solution alcaline de silicate de potassium peut comprendre une concentration de silicium Si comprise de 0,5 à 7 mol/L, de préférence de 0,5 à 3 mol/L. Cette gamme de concentration permet notamment d'obtenir des gels irréversibles stables. Par exemple, la solution alcaline de silicate de potassium commerciale peut comprendre une concentration de silicium comprise entre 4 et 5 mol/L, sensiblement égale à 4,7 mol/L. Elle peut être alors diluée avec de l'eau pour atteindre une concentration comprise entre 0,5 et 3 mol/L, par exemple sensiblement égale à 1,8 mol/L. Cette dilution fait également diminuer la viscosité de la solution vers des valeurs voisines de celle de l'eau pure.

Selon une caractéristique de l'invention, la solution alcaline de silicate de potassium peut comprendre un ratio molaire (SiO₂/K₂O) de dioxyde de silicium SiO₂ par rapport à l'oxyde de potassium K₂O compris entre 0,5 et 10, de préférence entre 1 et 5. Par exemple, la solution alcaline de silicate de potassium peut comprendre un ratio molaire de dioxyde de silicium SiO₂ par rapport à l'oxyde de potassium K₂O sensiblement égal à 4.

Conformément à une variante de réalisation de l'invention, la solution aqueuse gélifiante peut comprendre entre 1 et 30 % en masse d'acide acétique, de préférence entre 10 et 20 % en masse d'acide acétique par rapport à la masse totale de solution aqueuse gélifiante. Ainsi, il est possible de régler le pH de la solution aqueuse gélifiante. Par exemple, la solution aqueuse gélifiante peut comprendre sensiblement 16 % en masse d'acide acétique.

Selon un aspect de l'invention, la solution aqueuse gélifiante peut comprendre entre 0,1 et 1 % en masse d'aluminate, de préférence sensiblement 0,5 % par rapport à la masse totale de solution aqueuse gélifiante. Ces gammes permettent de limiter le mécanisme de synérèse au sein du gel, sans atteindre une limite de solubilité de l'aluminate dans l'eau.

Selon un mode de réalisation de l'invention, on peut préparer la solution aqueuse de silicate, par une dilution 50/50 eau et silicate. Ainsi, pour ce mode de réalisation, la concentration de silicium Si peut être comprise de 0,25 à 3,5 mol/L, de préférence de 0,25 à 1,5 mol/L au sein de la solution aqueuse gélifiante.

Selon un exemple de réalisation non limitatif, la solution aqueuse gélifiante peut être préparée à partir de :
- 12,3% en masse d'acide acétique à 2 mol/L
- 43,6 % en masse de solution de silicate de potassium,
- 0,5 % en masse d'aluminate de sodium,
- 43,6 % en masse d'eau.

Pour cet exemple, cette solution aqueuse gélifiante comporte :
- 85,5 % en masse d'eau (de la solution aqueuse gélifiante),
- 8,9 % en masse de silice,
- 3,6 % en masse de potassium,
- 1,5 % en masse d'acide acétique, et
- 0,5 % en masse d'aluminate de sodium.

Ce mode de réalisation préféré permet un compromis entre le temps de gélification, viscosité et limitation du mécanisme de synérèse, la composition étant ajustée en fonction des paramètres de la formation souterraine (notamment une température de 15°C, etc.).

Toutefois, la solution aqueuse gélifiante devant être adaptée à la formation souterraine peut comporter d'autres compositions.

Lorsque cela est utile, et en particulier lorsque la température de la formation visée est élevée, on peut encore augmenter le temps de gélification en utilisant un autre acide faible, tel que l'acide borique. La solution aqueuse gélifiante peut comprendre tout autre composé permettant notamment son adaptation à la formation souterraine.

Pour colmater une formation poreuse autour d'un puits, on peut opérer de la manière suivante :
- on prépare, en surface, une solution aqueuse gélifiante à partir d'une solution alcaline de silicate de potassium, d'eau, d'acide acétique et un aluminate. De préférence, ces mélanges sont réalisés graduellement pour éviter une précipitation locale due à une concentration excessive localisée. De tels dispositifs de mélange graduel sont disponibles de manière courante, par exemple pour la préparation de gels à partir de polymères. A des températures de surface inférieures à la température prévue dans la formation souterraine (par exemple 20°C par rapport à 40 °C), la cinétique de gélification est fortement ralentie, augmentant d'autant le temps disponible pour effectuer les mélanges, de manière très préférée, la préparation peut être mise en oeuvre de la manière suivante : on mélange l'aluminate dans l'eau, on dilue le silicate de potassium avec cette eau, puis on ajoute l'acide acétique en tenant compte de la température. Par exemple pour une température de 15°C, on peut prendre de l'acide acétique 2M, et pour une température de 40°C, on peut prendre de l'acide acétique 1M,
   - on injecte le mélange gélifiant (la solution aqueuse gélifiante) dans la formation, en particulier par des moyens de pompage classique ; à l'amont du volume injecté (fluide contenu dans le puits), on peut utiliser de l'eau sans provoquer de précipitation. A l'aval du volume injecté, on peut, de manière identique, utiliser de l'eau.

Un ordre de grandeur du temps de gélification de la solution aqueuse gélifiante à 40°C peut être d'environ 500 min soit 8,5 h. Cet ordre de grandeur est suffisant pour permettre de placer la solution aqueuse gélifiante dans la formation poreuse avant gélification. Par exemple, pour un volume poreux d'environ 10 m³ dans un rayon de 1 m autour d'un puits et sur une hauteur de 10 m avec une porosité de 30% - en utilisant un débit de pompage typique de 10 m³/h, le temps d'injection nécessaire de la solution aqueuse gélifiante est de 1 heure. A cela, il faut rajouter le temps de déplacement de la solution dans le puits qui peut durer environ 3 heures suivant la technique employée et le diamètre du tube d'injection. Par exemple pour le ciment d'un puits, on peut utiliser quelques litres de la solution aqueuse gélifiante.

Afin de laver la formation souterraine, le procédé peut comprendre une étape d'injection d'un fluide tampon, notamment de l'eau douce, préalablement à l'injection de la solution aqueuse gélifiante. De plus, le fluide de lavage peut contenir des additifs viscosifiants pour améliorer le lavage.

Dans le cas d'un puits de stockage de gaz acides, le volume du fluide de lavage injecté est de préférence suffisant pour repousser le gaz acide à une distance radiale d'au moins quelques mètres des abords du puits. Ce rinçage, préférentiellement à l'eau, assure par la suite une bonne injectivité de la solution aqueuse gélifiante comprenant le matériau réactif aux abords du puits. En l'absence de rinçage la méthode pourrait être moins efficace car il y a un risque de former rapidement des composés minéraux (carbonates et/ou sulfures) superficiels entraînant localement un bouchage de la porosité qui limiterait l'envahissement des abords de puits par la formulation réactive.

Le procédé peut comprendre, en outre, une étape de bouchage de puits après injection de la solution aqueuse gélifiante.

Par exemple, l'opération peut se terminer par l'injection d'un bouchon de ciment, ou toute autre formulation colmatante, pour maintenir le matériau réactif en place. Cette première opération terminée, il est possible de procéder à la même opération dans d'autres zones, en particulier au toit du réservoir après perforation du cuvelage et de la cimentation primaire de façon à permettre l'injection.

Le procédé selon l'invention peut être appliqué à un puits de stockage de gaz acides dans la formation souterraine. Il peut être également appliqué à un puits d'exploitation ou d'exploration d'une formation souterraine comprenant des hydrocarbures. Il peut être également appliqué à un puits utilisé pour la récupération d'hydrocarbures par fracturation, notamment par fracturation hydraulique. Dans ce cas, la solution aqueuse gélifiante permet le colmatage de la perforation et/ou des fractures formées pour le procédé. Alternativement, il peut être appliqué à tout type de stockage dans une formation souterraine, par exemple pour le stockage de matières radioactives. Pour toutes les applications, le procédé selon l'invention permet notamment de limiter les fuites de gaz à travers le puits, grâce à une étanchéification et/ou consolidation de la formation souterraine.

L'invention peut s'appliquer également à la fermeture d'un puits injecteur que l'on a décidé de ne plus utiliser, ce que l'on peut assimiler à l'abandon d'un puits pétrolier. Mais l'invention peut également être mise en oeuvre lors de la construction d'un puits spécifiquement foré pour le stockage géologique des gaz acides, qu'il ait lieu dans des roches réservoirs, des aquifères, ou des veines de charbon.

L'invention s'applique également à la consolidation de sols argileux sur lesquels des habitations, ou tous types de bâtiments sont construits, à la consolidation de terrains sableux qui ont peu de résistance mécanique. Pour cette application, le procédé selon l'invention est particulièrement avantageux, pour les habitations et bâtiments pour lesquels le comportement du sol argileux a généré des dégradations. Dans ce cadre, le procédé peut comprendre les étapes suivantes :
- on creuse au moins un puits ou un injecteur en dessous de l'habitation ou du bâtiment, par exemple à une profondeur de quelques mètres sous l'habitation ou du bâtiment,
- on prépare, en surface, une solution aqueuse gélifiante à partir d'une solution alcaline de silicate de potassium, d'eau, d'acide acétique et un aluminate. De préférence, ces mélanges sont réalisés graduellement pour éviter une précipitation locale due à une concentration excessive localisée. De tels dispositifs de mélange graduel sont disponibles de manière courante, par exemple pour la préparation de gels à partir de polymères. A des températures de surface inférieures à la température prévue dans la formation souterraine (par exemple 20°C par rapport à 40 °C), la cinétique de gélification est fortement ralentie, augmentant d'autant le temps disponible pour effectuer les mélanges, de manière très préférée, la préparation peut être mise en oeuvre de la manière suivante : on mélange l'aluminate dans l'eau, on dilue le silicate de potassium avec cette eau, puis on ajoute l'acide acétique en tenant compte de la température. Par exemple pour une température de 15°C, on peut prendre de l'acide acétique 2M, et pour une température de 40°C, on peut prendre de l'acide acétique 1M,
- on injecte le mélange gélifiant (la solution aqueuse gélifiante) dans le puits ou l'injecteur, en particulier par des moyens de pompage classique ; à l'amont du volume injecté (fluide contenu dans le puits), on peut utiliser de l'eau sans provoquer de précipitation. A l'aval du volume injecté, on peut, de manière identique, utiliser de l'eau.

### Exemple

Les caractéristiques et avantages du procédé selon l'invention apparaîtront plus clairement à la lecture de l'exemple comparatif ci-après.

Pour cet exemple, on compare le mécanisme de synérèse mis en oeuvre pour un gel formé par le procédé de l'art antérieur décrit dans la demande de brevet FR 3049642 (WO 2017/174243), c'est-à-dire sans aluminate, au mécanisme de synérèse pour un gel formé par le procédé selon l'invention, c'est-à-dire avec aluminate.

La solution aqueuse gélifiante du procédé selon l'art antérieur est préparée à température ambiante avec un silicate alcalin (Betol K 28 T), de l'eau douce, et un acide acétique 2 mol/L.

La solution aqueuse gélifiante du procédé selon l'invention est préparée avec l'ajout d'aluminate de sodium On peut remarquer qu'avec les quantités utilisées, le nombre de silicium substitué par de l'aluminium est au maximum de 10% dans le gel ainsi formé. La solution aqueuse gélifiante ainsi formée comporte 43,6 % en masse d'eau, 43,6 % en masse de silicate, 12,3 % d'acide acétique et 0,5 % en masse d'aluminate de sodium.

Pour cet exemple comparatif, on génère les deux gels dans des tubes à essai. En effet, dans un tube à essai, on peut distinguer l'eau dans et en dehors du gel (surnageant), permettant ainsi d'évaluer la cinétique du mécanisme. Cette mesure de l'eau est mise en oeuvre par résonance magnétique au moyen de la mesure des temps de relaxation transversal T2 permettant de distinguer l'eau dans le gel et hors du gel.

Le suivi de l'eau dans et en dehors du gel a été réalisé à température élevée (60°C) dans le but d'accélérer ces transformations qui peuvent durer plusieurs semaines à plus basse température. La figure 2 est un graphique de la fraction de l'eau dans le gel Fw (sans dimension, la valeur 1 correspondant à l'état initial lors de la formation du gel) en fonction du temps T en h. Sur cette figure, la courbe AA correspond au gel formé par le procédé selon l'art antérieur, et la courbe INV correspond au gel formé par le procédé selon l'invention. Ainsi, ce graphique montre de manière claire l'effet de l'ajout d'aluminate de sodium (INV) sur la quantité d'eau dans le gel en fonction du temps. On peut noter que pour cet exemple, la quantité d'aluminate ajoutée est pratiquement à la limite de sa solubilité dans l'eau. Le temps t=0 correspond à la formation du gel à température faible (15°C). Puis il est placé à 60°C. A t=100 h, la quantité d'eau dans le gel pour le procédé selon l'invention est stabilisée (car sensiblement constant entre 100 et 900h) et bien plus grande qu'en l'absence d'aluminate selon l'art antérieur (une fraction d'eau dans le gel d'environ 0,65 pour le procédé selon l'invention par rapport à une fraction d'eau d'environ 0,3 pour le procédé selon l'art antérieur). Par conséquent, le procédé selon l'invention permet de limiter le mécanisme de synérèse du gel formé dans la formation souterraine, ce qui garantit une bonne étanchéité et une bonne consolidation de la formation souterraine.

## Revendications

1. Procédé de traitement d'une formation souterraine, ladite formation souterraine étant traversée par au moins un puits d'injection, **caractérisé en ce qu'**on réalise les étapes suivantes :
a) On prépare une solution aqueuse gélifiante comprenant une solution alcaline de silicate de potassium, un acide acétique et un aluminate ; et
b) On injecte à partir dudit puits d'injection dans ladite formation souterraine ladite solution aqueuse gélifiante pour étanchéifier et/ou pour consolider ladite formation souterraine.

2. Procédé selon la revendication 1, dans lequel ledit aluminate est choisi parmi l'aluminate de sodium sous forme de poudre et l'aluminate de potassium sous forme de poudre.

3. Procédé selon l'une des revendications précédentes, dans lequel on prépare ladite solution aqueuse gélifiante en fonction de caractéristiques de ladite formation souterraine, telle que la porosité, la perméabilité, la température environnante et/ou le pH environnant.

4. Procédé selon l'une des revendications précédentes, dans lequel on prépare une solution aqueuse gélifiante ayant une viscosité comprise entre 1 et 10 cP.

5. Procédé selon l'une des revendications précédentes, dans lequel on prépare une solution aqueuse gélifiante ayant un temps de prise compris entre 3 et 20 heures.

6. Procédé selon l'une des revendications précédentes, dans lequel ledit acide acétique a une concentration comprise entre 0,1 et 5 mol/L, de préférence entre 0,5 et 2 mol/L.

7. Procédé selon l'une des revendications précédentes, dans lequel ladite solution alcaline de silicate de potassium comprend une concentration de silicium Si de 0,5 à 7 mol/L, de préférence de 0,5 à 3 mol/L.

8. Procédé selon l'une des revendications précédentes, dans lequel ladite solution alcaline de silicate de potassium comprend un ratio molaire de dioxyde de silicium SiO₂ par rapport à l'oxyde de potassium K₂O compris entre 0,5 et 10, de préférence entre 1 et 5.

9. Procédé selon l'une des revendications précédentes, dans lequel ladite solution aqueuse gélifiante comprend entre 1 et 30 % en masse d'acide acétique, de préférence entre 5 et 30 %.

10. Procédé selon l'une des revendications précédentes, dans lequel la solution aqueuse gélifiante peut comprendre entre 0,1 et 1 % en masse d'aluminate, de préférence entre 0,3 et 0,8%, de manière très préférée entre 0,4 et 0,6% sensiblement 0,5 % en masse d'aluminate.

11. Procédé selon l'une des revendications précédentes, dans lequel on injecte à partir dudit puits d'injection un fluide de lavage dans ladite formation souterraine préalablement à l'injection de ladite solution aqueuse gélifiante.

12. Procédé selon l'une des revendications précédentes, dans lequel ledit traitement de la formation souterraine est une étanchéification de ladite formation souterraine, et/ou une consolidation de ladite formation souterraine, et/ou un colmatage d'un puits de ladite formation souterraine.

13. Procédé selon l'une des revendications précédentes, dans lequel ledit puits est un puits de stockage, en particulier de stockage de gaz acide dans ladite formation souterraine.

14. Procédé selon la revendication 13, dans lequel on stocke ledit gaz acide préalablement à l'étape d'injection de ladite solution aqueuse gélifiante.

15. Procédé selon la revendication 12, dans lequel ledit traitement de la formation souterraine est une consolidation d'un sol argileux, sur lequel est construit une habitation ou un bâtiment.

16. Procédé selon l'une des revendications précédentes, dans laquelle ladite formation souterraine comporte un pH environnant inférieur à 9.

## Patentansprüche

1. Verfahren zur Behandlung einer unterirdischen Formation, wobei die unterirdische Formation von mindestens einem Injektionsschacht durchquert wird, **dadurch gekennzeichnet, dass** man die folgenden Schritte ausführt:
a) Man bereitet eine gelbildende wässrige Lösung zu, die eine alkalische Kaliumsilikatlösung, eine Essigsäure und ein Aluminat umfasst; und
b) Man injiziert ausgehend von dem Injektionsschacht in die unterirdische Formation die gelbildende wässrige Lösung, um die unterirdische Formation abzudichten und/oder zu verfestigen.

2. Verfahren nach Anspruch 1, bei dem das Aluminat unter pulverförmigem Natriumaluminat und pulverförmigem Kaliumaluminat gewählt wird.

3. Verfahren nach einem der vorhergehenden Ansprüche, bei dem man die gelbildende wässrige Lösung in Abhängigkeit von Merkmalen der unterirdischen Formation wie der Porosität, der Permeabilität, der Umgebungstemperatur und/oder des Umgebungs-pH-Werts zubereitet.

4. Verfahren nach einem der vorhergehenden Ansprüche, bei dem man eine gelbildende wässrige Lösung zubereitet, die eine Viskosität zwischen 1 und 10 cP besitzt.

5. Verfahren nach einem der vorhergehenden Ansprüche, bei dem man eine gelbildende wässrige Lösung zubereitet, die eine Abbindezeit zwischen 3 und 20 Stunden besitzt.

6. Verfahren nach einem der vorhergehenden Ansprüche, bei dem die Essigsäure eine Konzentration zwischen 0,1 und 5 mol/L, bevorzugt zwischen 0,5 und 2 mol/L besitzt.

7. Verfahren nach einem der vorhergehenden Ansprüche, bei dem die alkalische Kaliumsilikatlösung eine Siliciumkonzentration Si von 0,5 bis 7 mol/L, bevorzugt von 0,5 bis 3 mol/L aufweist.

8. Verfahren nach einem der vorhergehenden Ansprüche, bei dem die alkalische Kaliumsilikatlösung ein Molverhältnis von Siliciumdioxid SiO₂ zu Kaliumoxid K₂O zwischen 0,5 und 10, bevorzugt zwischen 1 und 5 aufweist.

9. Verfahren nach einem der vorhergehenden Ansprüche, bei dem die gelbildende wässrige Lösung zwischen 1 und 30 Masse-% Essigsäure, bevorzugt zwischen 5 und 30 % aufweist.

10. Verfahren nach einem der vorhergehenden Ansprüche, bei dem die gelbildende wässrige Lösung zwischen 0,1 und 1 Masse-% Aluminat, bevorzugt zwischen 0,3 und 0,8 %, sehr bevorzugt zwischen 0,4 und 0,6 %, im Wesentlichen 0,5 Masse-% Aluminat aufweisen kann.

11. Verfahren nach einem der vorhergehenden Ansprüche, bei dem man ausgehend von dem Injektionsschacht vor dem Injizieren der gelbildenden wässrigen Lösung eine Spülflüssigkeit in die unterirdische Formation injiziert.

12. Verfahren nach einem der vorhergehenden Ansprüche, bei dem die Behandlung der unterirdischen Formation ein Abdichten der unterirdischen Formation und/oder ein Verfestigen der unterirdischen Formation und/oder ein Versiegeln eines Schachts der unterirdischen Formation ist.

13. Verfahren nach einem der vorhergehenden Ansprüche, bei dem der Schacht ein Lagerschacht ist, insbesondere zum Lagern von saurem Gas in der unterirdischen Formation.

14. Verfahren nach Anspruch 13, bei dem man das saure Gas vor dem Schritt des Injizierens der gelbildenden wässrigen Lösung lagert.

15. Verfahren nach Anspruch 12, bei dem die Behandlung der unterirdischen Formation ein Verfestigen eines tonhaltigen Bodens ist, auf dem ein Wohnhaus oder ein Gebäude errichtet wird.

16. Verfahren nach einem der vorhergehenden Ansprüche, bei dem die unterirdische Formation einen Umgebungs-pH-Wert von weniger als 9 aufweist.

## Claims

1. Process for the treatment of a subterranean formation, said subterranean formation being passed through by at least one injection well, **characterized in that** the following steps are carried out:
a) an aqueous gelling solution comprising an alkaline potassium silicate solution, an acetic acid and an aluminate is prepared; and
b) said aqueous gelling solution is injected from said injection well into said subterranean formation in order to seal and/or consolidate said subterranean formation.

2. Process according to Claim 1, wherein said aluminate is chosen from powder-form sodium aluminate and powder-form potassium aluminate.

3. Process according to either of the preceding claims, wherein said aqueous gelling solution is prepared depending on the characteristics of said subterranean formation, such as the porosity, the permeability, the surrounding temperature and/or the surrounding pH.

4. Process according to one of the preceding claims, wherein an aqueous gelling solution having a viscosity of between 1 and 10 cP is prepared.

5. Process according to one of the preceding claims, wherein an aqueous gelling solution having a setting time of between 3 and 20 hours is prepared.

6. Process according to one of the preceding claims, wherein said acetic acid has a concentration of between 0.1 and 5 mol/L, preferably between 0.5 and 2 mol/L.

7. Process according to one of the preceding claims, wherein said alkaline potassium silicate solution comprises a concentration of silicon Si of from 0.5 to 7 mol/L, preferably from 0.5 to 3 mol/L.

8. Process according to one of the preceding claims, wherein said alkaline potassium silicate solution comprises a molar ratio of silicon dioxide SiO₂ relative to potassium oxide K₂O of between 0.5 and 10, preferably between 1 and 5.

9. Process according to one of the preceding claims, wherein said aqueous gelling solution comprises between 1% and 30% by mass of acetic acid, preferably between 5% and 30%.

10. Process according to one of the preceding claims, wherein the aqueous gelling solution can comprise between 0.1% and 1% by mass of aluminate, preferably between 0.3% and 0.8%, very preferably between 0.4% and 0.6%, substantially 0.5% by mass of aluminate.

11. Process according to one of the preceding claims, wherein a washing fluid is injected from said injection well into said subterranean formation prior to the injection of said aqueous gelling solution.

12. Process according to one of the preceding claims, wherein said treatment of the subterranean formation is a sealing of said subterranean formation, and/or a consolidation of said subterranean formation, and/or a plugging of a well of said subterranean formation.

13. Process according to one of the preceding claims, wherein said well is a storage well, in particular for storing acid gas in said subterranean formation.

14. Process according to Claim 13, wherein said acid gas is stored prior to the step of injecting said aqueous gelling solution.

15. Process according to Claim 12, wherein said treatment of the subterranean formation is a consolidation of a clayey soil on which a dwelling or building is constructed.

16. Process according to one of the preceding claims, wherein said subterranean formation comprises a surrounding pH of less than 9.
